# EUROPEAN PATENT APPLICATION

(11) **EP 2 262 033 A1**
(43) Date of publication of application: **15.12.2010**
(21) Application number: 10163072.1
(22) Date of filing: 18.05.2010
(51) Int. Cl.: H01M 2/02, H01M 2/12

(54) **Electric storage device**

(30) Priority: 18.05.2009 JP 2009120221
(71) Applicant: Fuji Jukogyo Kabushiki Kaisha, Tokyo 160-8316 (JP)
(72) Inventor: Yanagita, Hideo, Tokyo Tokyo 160-8316 (JP); Nomura, Sawako, Tokyo Tokyo 160-8316 (JP); Kudo, Satoru, Tokyo Tokyo 160-8316 (JP)
(74) Representative: Sajda, Wolf E.

(57) **Abstract**

Sealing strips (20 and 21) are formed on an outer container (12) of an electric storage device (10) by heat sealing processing so as to surround an electrode housing portion (23). Further, a safety valve portion (21a) having a narrower sealing width than other sites is formed in the center of the sealing strip (21). Furthermore, a sealing strip (22) is formed on the outer container (12) to oppose the safety valve portion (21a) at a predetermined distance. When an internal pressure of the electrode housing portion (23) exceeds a prescribed value due to overcharge, etc., a sealing surface of the safety valve portion (21a) peels away, thereby opening the safety valve portion (21a) such that gas (G) in the electrode housing portion is discharged from the opened safety valve portion (21a). Electrode material and an electrolyte (X) are also discharged, but trapped by the sealing strip (22).

## Description

### BACKGROUND OF THE INVENTION

### 1. Field of the Invention

The present invention relates to an electric storage device including a film type container.

### 2. Description of the Related Art

Examples of an electric storage device to be installed in an electric vehicle or the like include a lithium ion secondary battery and a lithium ion capacitor. When an abnormality such as overcharging, overdischarging, internal short-circuits or external short-circuits occurs in this type of electric storage device, an outer container may be swollen by gas generated from an electrolyte.

Therefore, a safety valve is attached to a metal can or the like constituting the outer container of the electric storage device so that when the internal pressure of the outer container rises, the safety valve is opened to release the gas.

Incidentally, a film type container employing a laminate film has been proposed as an outer container of the electric storage device in order to achieve reductions in the size and weight of the electric storage device. However, it is difficult to attach a safety valve to a film type container, and therefore electric storage devices in which a weakened portion such as a groove or a notch is formed in the film type container have been proposed (see Japanese Unexamined Patent Application Publications JP-A-1999-312 505, JP-A-2003-297 322, and JP-A-2000-100 399, for example).

Hence, when the internal pressure of the container rises due to gas generation, the gas can be released by opening the weakened portion, and in so doing, rupturing and so on of the outer container can be forestalled.

However, in the electric storage devices described in JP-A-1999-312 505, JP-A-2003-297 322, and JP-A-2000-100 399, the outer container is simply formed with the weakened portion, and therefore, when the internal pressure of the outer container rises such that the weakened portion is opened, electrode material, electrolyte solution, and so on may be released out together with the gas.

When the electrolyte and the like of the electric storage device are released out in this manner, the safety of the electric storage device deteriorates, and there is therefore a need and demand for a structure that prevents the release of the electrolyte and so on.

### SUMMARY OF THE INVENTION

An object of the present invention is to improve the safety of an electric storage device by suppressing the release of electrode material, electrolyte solution, and so on.

An electric storage device according to the present invention includes a film type container formed by adhering film materials to each other, and an electrode unit housed in an electrode housing portion of the film type container, wherein a first sealing strip that defines the electrode housing portion is formed on the film type container, a part of the first sealing strip being formed as a safety valve portion having a lower sealing strength than another site thereof, and a second sealing strip that opposes the safety valve portion at a predetermined distance and defines with the first sealing strip a discharge flow passage is formed on the film type container.

In a specific embodiment of the electric storage device according to the present invention, the electrolyte housed in the film type container contains an organic solvent.

In a specific embodiment of the electric storage device according to the present invention, an end portion of the discharge flow passage is open.

In a specific embodiment of the electric storage device according to the present invention, an end portion of the discharge flow passage is sealed and a through hole is formed in the film materials on the discharge flow passage.

According to the present invention, the second sealing strip is provided opposite to the safety valve portion, and therefore an electrode material, an electrolyte solution, and so on discharged from the safety valve portion can impinge on the second sealing strip.

Therefore, the electrode material, the electrolyte solution, and so on can be trapped by the second sealing strip, and as a result, the release of the electrode material and electrolyte solution can be suppressed, thereby enabling an improvement in the safety of the electric storage device.

### BRIEF DESCRIPTION OF THE DRAWINGS

- Fig. 1: is a perspective view showing an electric storage device serving as an embodiment of the present invention;
- Fig. 2: is an exploded perspective view showing the structure of the electric storage device;
- Fig. 3: is an illustrative view showing an outer container in a sealed state;
- Fig. 4A: is an illustrative view showing a gas discharge route when a safety valve portion is operated, and
- Fig. 4B: is a perspective view showing the electric storage device when the safety valve portion is operated;
- Fig. 5: is an illustrative view showing an outer container of an electric storage device according to another embodiment of the present invention in a sealed state; and
- Fig. 6A: is an illustrative view showing an outer container of an electric storage device according to another embodiment of the present invention in a sealed state, and
- Fig. 6B: is a perspective view showing the electric storage device when a safety valve portion is operated.

### DESCRIPTION OF THE PREFERRED EMBODIMENTS

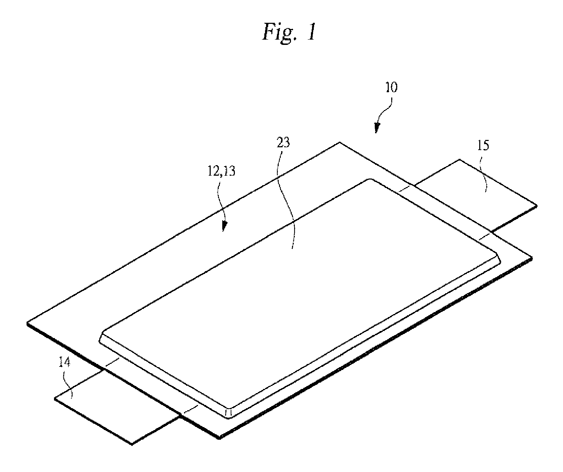

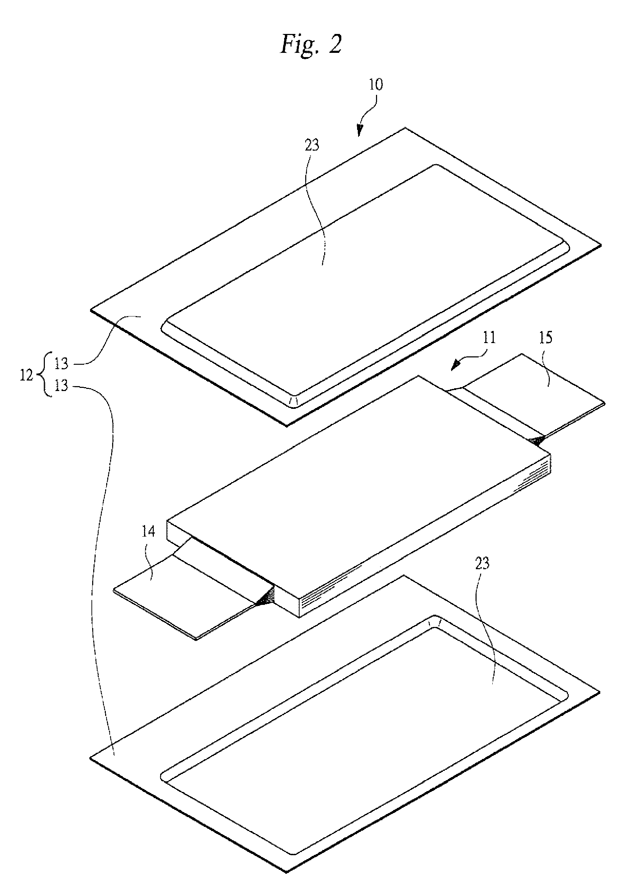

Fig. 1 is a perspective view showing an electric storage device 10 according to an embodiment of the present invention. Fig. 2 is an exploded perspective view showing the structure of the electric storage device 10. As shown in Figs. 1 and 2, the electric storage device 10 includes an outer container (a film type container) 12 housing an electrode unit 11.

The outer container 12 is formed by adhering a pair of laminate films (film materials) 13 to each other. The laminate film 13 has a laminated structure in which a plastic film is laminated onto either side of a sheet of aluminum foil. A material that exhibits superior mechanical strength and thermal resistance, such as a nylon film, is used for the plastic film constituting an outer layer of the laminate film 13.

Further, a material that is highly moisture-proof and exhibits a superior sealing property, such as polyethylene or polypropylene, is used for the plastic film constituting an inner layer of the laminate film 13.

Polyethylene and polypropylene can be adhered easily when heated. Therefore, by implementing heat sealing processing on the laminate films 13 overlapped such that the respective inner layers thereof face each other, the laminate films 13 can be joined to each other to form the outer container 12.

The electrode unit 11 housed in the outer container 12 is constituted by a positive electrode and a negative electrode laminated alternately via a separator. Further, an electrolyte containing an organic solvent such as ethylene carbonate or propylene carbonate is injected into the outer container 12.

Furthermore, a positive electrode terminal 14 that projects from an adhered surface of the laminate film 13 is joined to the positive electrode, and a negative electrode terminal 15 that projects from the adhered surface of the laminate film 13 is joined to the negative electrode.

Although a laminated electrode unit is illustrated as the electrode unit 11, the present invention is not limited thereto, and a wound electrode unit in which an elongated positive electrode and an elongated negative electrode are overlapped and wound may be used instead.

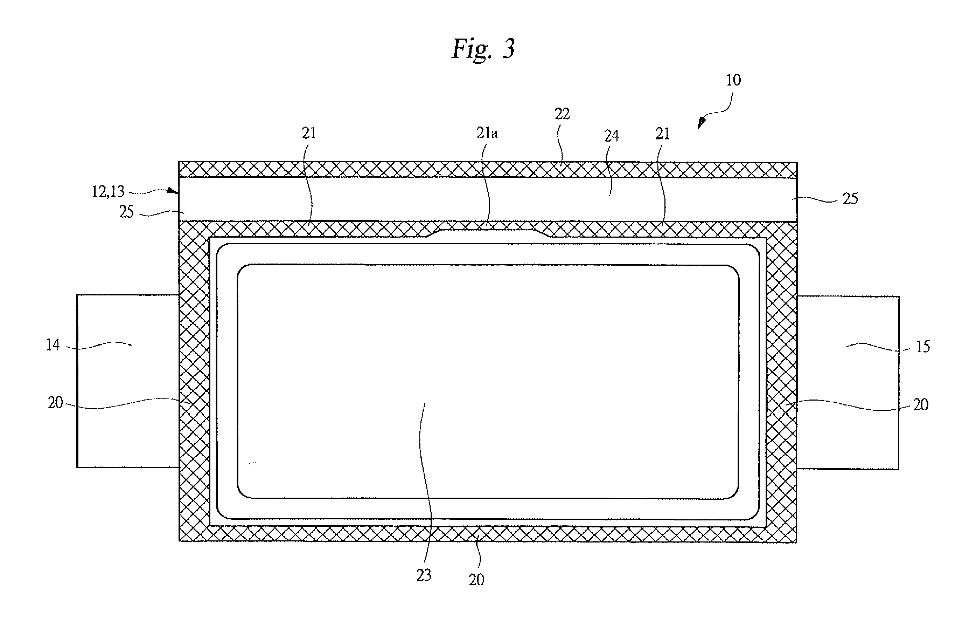

Fig. 3 is an illustrative view showing the outer container 12 in a sealed state. Sites indicated by shading in Fig. 3 correspond to sites that are sealed by heat sealing processing. During a manufacturing process of the electric storage device 10, the pair of laminate films 13 are aligned so as to sandwich the electrode unit 11. Heat sealing processing is then implemented on a lower portion and side portions of the laminate films 13 such that a substantially U-shaped sealing strip 20 is formed from the lower portion to the two side portions.

Next, the electrolyte is injected into the laminate films 13, which are formed into a bag shape by the sealing strip 20, whereupon heat sealing processing is implemented on an upper portion of the laminate films 13. In this heat sealing process, two sealing strips 21 and 22 are formed on the upper portion of the laminate films 13.

By implementing heat sealing processing on the laminate films 13 in this manner, an electrode housing portion 23 housing the electrode unit 11 is defined by the first sealing strips 20 and 21. Further, a safety valve portion 21 a is formed substantially in the center of the sealing strip 21 with a heat seal width narrower than the other sites.

In other words, a sealing strength of the safety valve portion 21a is designed to be lower than the sealing strength of the other portions of the sealing strips 20 and 21. The second sealing strip 22 is formed on the laminate films 13 to oppose the safety valve portion 21a at a predetermined distance.

Furthermore, a discharge flow passage 24 is defined between the sealing strips 21 and the sealing strip 22, which is substantially parallel to the sealing strip 21, by the sealing strips 21 and 22. Note that an end portion 25 of the discharge flow passage 24 is open.

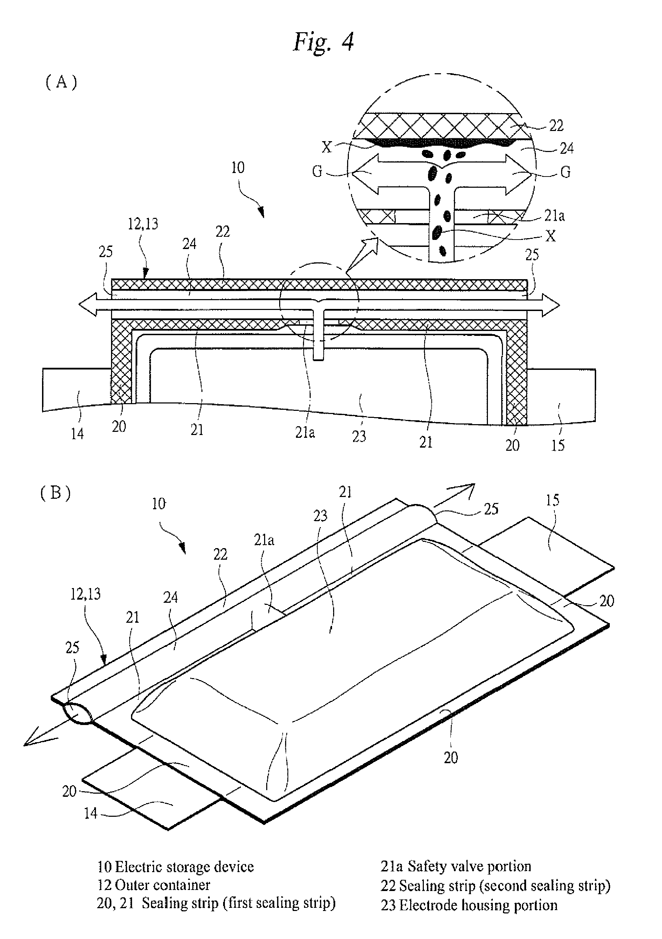

Fig. 4A is an illustrative view showing a gas discharge route when the safety valve portion 21a is operated, and Fig. 4B is a perspective view showing the electric storage device 10 when the safety valve portion 21a is operated. When an abnormality such as an overcharge or an internal short-circuit occurs in the electric storage device 10, the electrolyte decomposes such that gas is generated, and as a result, an internal pressure of the electrode housing portion 23 rises.

As shown in Figs. 4A and 4B, when the internal pressure of the electrode housing portion 23 rises above a prescribed value, a sealing surface of the safety valve portion 21a peels away. In other words, the gas can be discharged by opening the safety valve portion 21a before the internal pressure of the electrode housing portion 23 increases dramatically, and as a result, rupturing of the outer container 12 and so on can be forestalled.

Note that in the above description, the term "operated" is used in relation to the safety valve portion 21a, but this term actually means that the safety valve portion 21a "opens" when the internal pressure of the electrode housing portion 23 rises such that the sealing surface of the safety valve portion 21a peels away,

Incidentally, when the internal pressure of the electrode housing portion 23 rises such that the safety valve portion 21 a opens, an electrode material, an electrolyte solution, and so on are discharged from the safety valve portion 21 a together with the gas. When an electrode material, an electrolyte solution, and so on are released out in this manner, the safety of the electric storage device 10 deteriorates.

In particular, the electrolyte employed in a lithium ion secondary battery, a lithium ion capacitor, and so on is often an organic solvent electrolyte formed by dissolving lithium salt in a combustible organic solvent, and there is therefore a need and demand for a structure that prevents the electrolyte from being released to the outside.

Hence, in the outer container 12 of the electric storage device 10 according to the present invention, the sealing strip 22 is provided opposite the safety valve portion 21a at the predetermined distance. By providing the sealing strip 22, housed substances (electrode material, electrolyte solution, gas, and so on) discharged from the safety valve portion 21a can be caused to impinge on the sealing strip 22, as shown in Fig. 4A, whereupon gas G can be separated from housed substances including electrolyte solution X and so on.

A flow direction of the separated gas G is then altered such that the gas G is guided to the discharge flow passage 24 and discharged to the outside from the open end portion 25 of the discharge flow passage 24. Hence, by providing the sealing strip 22 opposite the safety valve portion 21a, the electrode material, the electrolyte solution X, and so on can be trapped, and therefore the release of the electrode material, the electrolyte solution X, and so on can be suppressed.

As a result, the safety of the electric storage device 10 can be increased. Moreover, the increase in safety can be achieved simply by modifying a heat sealing pattern on the laminate films 13 to form the safety valve portion 21 a and the sealing strip 22, and therefore the cost of the improved-safety electric storage device 10 can be suppressed.

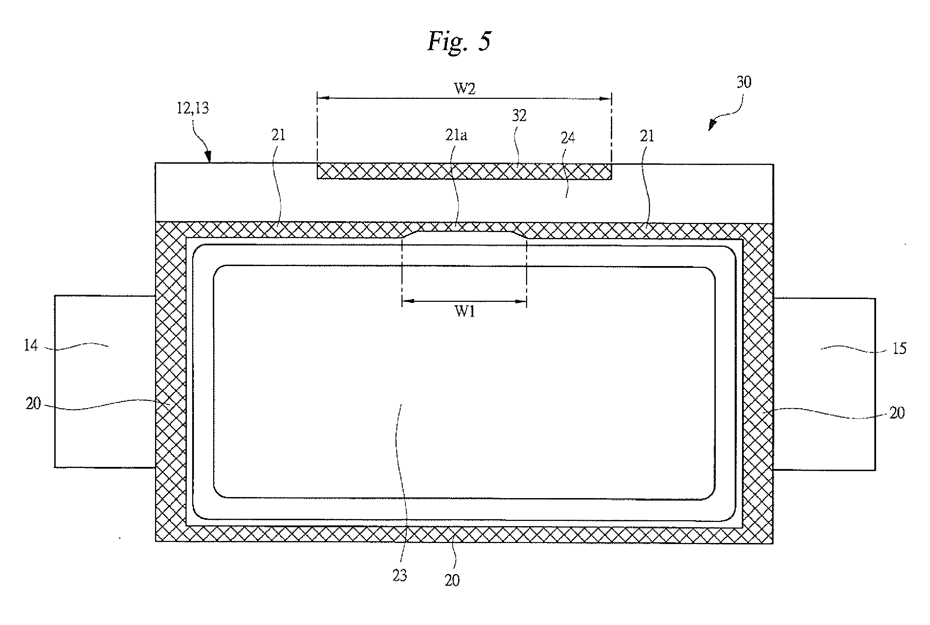

Fig. 5 is an illustrative view showing an outer container (a film type container) 31 of an electric storage device 30 in a sealed state according to another embodiment of the present invention. Note that identical reference symbols have been allocated to members (constitutional parts) that are identical to the members (constitutional parts) shown in Fig. 3, and description thereof has been omitted.

As shown in Fig. 5, a second sealing strip 32 provided on the upper portion of the laminate films 13 is formed to be shorter than the sealing strip 22 described above. Even when the sealing strip 32 is made shorter, identical effects to those described above can be obtained as long as a width dimension W2 of the sealing strip 32 is made longer than a width dimension W1 of the safety valve portion 21a and the sealing strip 32 is disposed opposite the safety valve portion 21a,

In other words, as long as the sealing strip 32 is structured to cover an opening range of the safety valve portion 21a, the electrode material, electrolyte solution, and so on can be trapped by the safety strip 32, and therefore identical effects to those described above can be obtained.

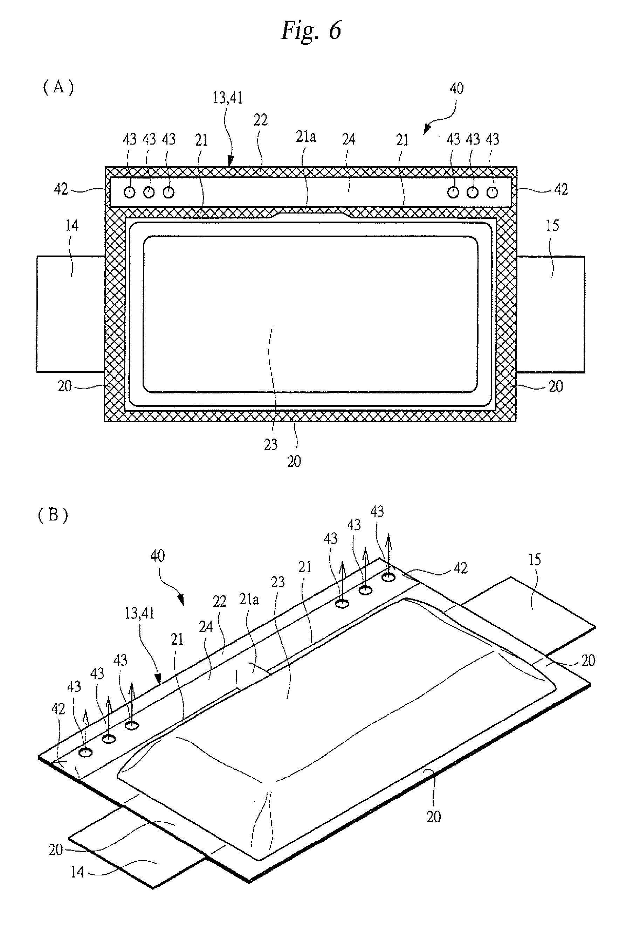

Fig. 6A is an illustrative view showing an outer container (a film type container) 41 of an electric storage device 40 in a sealed state according to another embodiment of the present invention, and Fig. 6B is a perspective view showing the electric storage device 40 when the safety valve portion 21 a is operated.

Note that identical reference symbols have been allocated to members (constitutional parts) that are identical to the members (constitutional parts) shown in Fig. 3, and description thereof has been omitted. As shown in Fig. 6A, an end portion 42 of the discharge flow passage 24 is sealed by heat sealing processing, and through holes 43 are formed in the laminate films 13 on the discharge flow passage 24.

Note that the through holes 43 are formed on the outside of the opening range of the safety valve portion 21a. As shown in Fig. 6B, when an abnormality occurs such that the safety valve portion 21 a opens, the gas G is guided through the discharge flow passage 24 to the through holes 43 and discharged in a thickness direction of the electric storage device 40.

Hence, the electrode material, the electrolyte solution, and so on can be trapped not only by the sealing strip 22 but also by the end portion 42 of the discharge flow passage 24, and therefore the release of the electrolyte solution and so on can be greatly restricted.

The present invention was described in detail above on the basis of the drawings, but the present invention is not limited to the above embodiments and may be subjected to various modifications within a scope that does not depart from the spirit thereof. For example, the outer container 12 of the electric storage device 10 shown in Fig. 3 is structured such that the end portion 25 of the discharge flow passage 24 is open.

However, heat sealing processing may be implemented to close the end portion 25 of the discharge flow passage 24, similarly to the outer container 41 of the electric storage device 40 shown in Fig. 6. In this case, the sealing strength of the end portion 25 must be set so that the end portion 25 of the discharge flow passage 24 is peeled away by a pressure equal to that applied to the safety valve portion 21 a.

Further, the outer container 41 of the electric storage device 40 shown in Fig. 6 is structured such that the end portion 42 of the discharge flow passage 24 is closed. However, the end portion 42 of the discharge flow passage 24 may be opened, similarly to the outer container 12 of the electric storage device 10 shown in Fig. 3.

Moreover, in Fig. 6, the through holes 43 are simply formed in the laminate films 13, but heat sealing processing may be implemented to close an edge portion of the through holes 43. In this case, the sealing strength of the edge portion of the through holes 43 must be set so that the edge portion is peeled away by a pressure equal to that applied to the safety valve portion 21 a.

Furthermore, in the above description, the outer containers 12, 31 and 41 are formed by laminating the pair of laminate films 13, but an outer container may be formed by folding back one sheet of laminate film.

Moreover, in the above description, the sealing strips 20 to 22 and 32 and the safety valve portion 21 a are formed on the outer containers 12, 31 and 41 by implementing heat sealing processing on the laminate films 13, but the present invention is not limited thereto, and the sealing strips 20 to 22 and 32 and the safety valve portion 21 a may be formed on the outer containers 12, 31 and 41 by applying an adhesive to the laminate films 13 in a predetermined pattern.

Further, in the above description, the laminate films 13 having a three-layer structure are used as the film material constituting the outer containers 12, 31 and 41, but the present invention is not limited thereto, and laminate films having a structure other than a three-layer structure, such as a single-layer structure, may be used instead.

### List of Reference Signs

- 10: electric storage device
- 11: electrode unit
- 12: outer container
- 13: laminate film
- 14: positive electrode terminal
- 15: negative electrode terminal
- 20: sealing strip
- 21: sealing strip
- 21a: safety valve portion
- 22: sealing strip
- 23: electrode housing portion
- 24: discharge flow passage
- 25: end portion
- 30: electric storage device
- 31: outer container
- 32: second sealing strip 32
- 40: electric storage device
- 41: outer container
- 42: end portion
- 43: through holes
- G: gas
- X: electrolyte solution
- W1: width dimension
- W2: width dimension

## Claims

1. An electric storage device (10), comprising a film type container (12) formed by adhering film materials (13) to each other, and an electrode unit (11) housed in an electrode housing portion (23) of the film type container (12), wherein
a first sealing strip (20, 21) that defines the electrode housing portion (23) is formed on the film type container (12), a part of the first sealing strip (20, 21)being formed as a safety valve portion (21a)having a lower sealing strength than another site thereof, and
a second sealing strip (22) that opposes the safety valve portion (21a)via a predetermined interval and defines with the first sealing strip (20, 21) a discharge flow passage (24) is formed on the film type container (12).

2. The electric storage device (10) according to claim 1,
wherein an electrolyte (X) housed in the film type container (12) contains an organic solvent.

3. The electric storage device (10) according to claim 1 or 2,
wherein an end portion (25) of the discharge flow passage (24) is open.

4. The electric storage device (10) according to claim 1 or 2,
wherein an end portion (42) of the discharge flow passage (24) is sealed and a through hole(43) is formed in the film materials (13) on the discharge flow passage (24).
